# EUROPEAN PATENT APPLICATION

(11) **EP 3 037 874 A1**
(43) Date of publication of application: **29.06.2016**
(21) Application number: 15202352.9
(22) Date of filing: 23.12.2015
(51) Int. Cl.: G02F 1/1335, F21V 8/00

(54) **DISPLAY APPARATUS**

(30) Priority: 26.12.2014 KR 20140190760
(71) Applicant: Samsung Electronics Co., Ltd., Suwon-si, Gyeonggi-do (KR)
(72) Inventor: Choi, Jin Seung, Suwon-si, Gyeonggi-do (KR); Kim, Joo Ho, Suwon-si, Gyeonggi-do (KR)
(74) Representative: Gulde & Partner

(57) **Abstract**

Disclosed herein is a display apparatus including a liquid crystal panel (110) in which a liquid crystal material (113) is filled between a display substrate (111) and a rear substrate (112). A light reflection prevention pattern (111a) to suppress reflection of light incident from the rear side is formed at the rear surface of a display substrate (111), such that the quantity of light passing through the display substrate and transferred to the front of the display apparatus increases, thus improving visibility of the display apparatus.

## Description

### BACKGROUND

The present disclosure relates to a display apparatus in which a light unit is disposed in front of a display panel.

Generally, a display apparatus includes a display module on which an image is displayed. The display apparatus includes a television and a monitor.

The display apparatus may be classified as a general display apparatus including a backlight unit disposed behind a liquid crystal panel to supply light to the liquid crystal panel disposed in front, and a display apparatus including a front light unit disposed in front of a liquid crystal panel to supply light to the liquid crystal panel disposed behind.

The display apparatus including the backlight unit is mostly used in a relatively dark environment such as an indoor space, and the display apparatus including the front light unit is mostly used in a relatively bright environment such as a sunlit outdoor space.

### SUMMARY

Therefore, it is an aspect of the present disclosure to provide a display apparatus capable of further improving visibility.

According to an aspect of the present disclosure, a display apparatus includes a display panel, wherein the display panel includes a display substrate and a rear substrate spaced apart in front and rear directions and a display material filled between the display substrate and the rear substrate, and a light reflection prevention pattern to suppress a reflection of light incident from a rear side is formed at a rear surface of the display substrate.

In addition, the light reflection prevention pattern may be formed by grooves having a depth and width of nanoscales.

In addition, the display apparatus may further include a front light unit disposed in front of the display panel to supply light to the display panel.

In addition, the front light unit may include a light guide plate disposed in front of the display panel and a light source to generate light.

In addition, the light source may include substrate and a plurality of light-emitting diodes disposed on the substrate.

In addition, the substrate may be disposed parallel to one end of the light guide plate, and the plurality of light emitting diodes may be disposed on one surface of the substrate facing the one end of the light guide plate.

In addition, the display apparatus may further include a light guide member formed in a bar shape and disposed to face a side end of the light guide plate.

In addition, the light guide member may be formed to have a right-angled triangular cross-section, and a reflective layer to reflect light may be formed at one surface of the light guide member forming a hypotenuse.

In addition, the plurality of light emitting diodes may be disposed to face one end of the light guide member, and the light guide member may include a reflective pattern to reflect light toward a side end of the light guide plate.

In addition, the front light unit may include a light reflection prevention layer provided at a front surface of the light guide plate to suppress reflection of light.

In addition, the front light unit may include a light reflection prevention layer provided at a front surface of the light guide plate to suppress the reflection of light incident.

In addition, according to an aspect of the present disclosure, a display apparatus includes a first display module and a second display module disposed behind the first display module, wherein the first display module includes a display panel and a front light unit disposed in front of the display panel to supply light to the display panel, the display panel includes a display substrate and a rear substrate spaced apart in front and rear directions and a liquid crystal material filled between the display substrate and the rear substrate, and a light reflection prevention pattern to suppress a reflection of light incident from a rear side is formed at a rear surface of the display substrate.

### BRIEF DESCRIPTION OF THE DRAWINGS

These and/or other aspects of the disclosure will become apparent and more readily appreciated from the following description of the embodiments, taken in conjunction with the accompanying drawings of which:
FIG. 1 is a cross-sectional view of a display apparatus according to a first embodiment of the present disclosure;
FIG. 2 is an enlarged view of a portion A in FIG. 1;
FIG. 3 is a cross-sectional view of a display apparatus according to a second embodiment of the present disclosure;
FIG. 4 is a perspective view of the display apparatus according to the second embodiment of the present disclosure;
FIG. 5 is a perspective view of a display apparatus according to a third embodiment of the present disclosure; and
FIG. 6 is a cross-sectional view of a display apparatus according to a fourth embodiment of the present disclosure.

### DETAILED DESCRIPTION

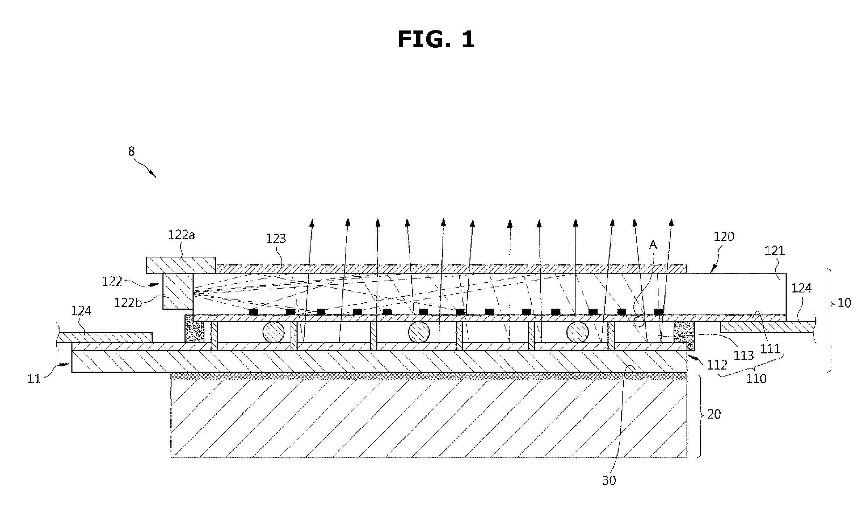

Hereinafter, a display apparatus 8 according to a first embodiment of the present disclosure will be described with reference to FIG. 1.

As illustrated in FIG. 1, the display apparatus 8 according to the first embodiment of the present disclosure includes a first display module 10 and a second display module 20 disposed behind the first display module 10.

The second display module 20 is attached to a rear substrate 112 of the first display module 10 to be described below through an optical clear adhesive (OCA) 30. In some embodiments, the second display module 20 may include a liquid crystal panel, a backlight unit or display modules including an organic light-emitting diode panel.

Accordingly, a screen is displayed through the first display module 10 when an outside of the display apparatus is relatively bright such as in a sunlit outdoor space, and a screen is displayed through the second display module 20 when an outside of the display apparatus is relatively dark such as in an indoor space.

The first display module 10 includes a display panel 110 formed in a shape of a quadrilateral flat plate, and a front light unit 120 disposed in front of the display panel 110 to supply light to the display panel 110.

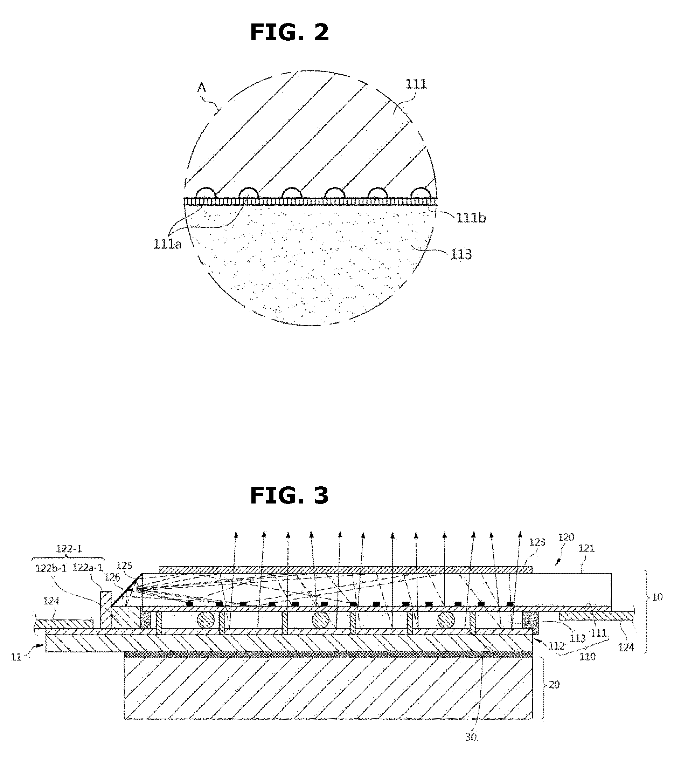

The display panel 110 is formed of a liquid crystal panel, and includes a display substrate 111 and a rear substrate 112 spaced apart from each other in front and rear directions, and a display material 113 filled between the display substrate 111 and the rear substrate 112. The display substrate 111 and the rear substrate 112 are formed of clear materials to allow light to be transmitted therethrough, and clear electrodes to transfer electrical signals are formed thereon. The display substrate 111 and the rear substrate 112 are formed of clear materials to allow light to pass therethrough, and the display material 113 is formed of cholesteric liquid crystal. In FIG. 2, only a clear electrode 111 b provided at the display substrate 111 is displayed.

In this embodiment, a light reflection prevention pattern 111 a to suppress reflection of light incident from the rear side is provided at a rear surface of the display substrate 111 as illustrated in FIG. 2. The light reflection prevention pattern 111 a is formed by grooves having a depth and width in nanoscales. Dots of a predetermined size are formed on a nanostructural surface forming the light reflection prevention pattern 111 a, and the size and intervals of the dots are randomly adjusted such that a Moire phenomenon or pattern may be prevented by the light reflection prevention pattern 111 a. The light reflection prevention pattern 111 a is formed by etching the rear surface of the display substrate 111, and the clear electrode 111 b is laminated on a substrate on which the light reflection prevention pattern 111 a is formed.

Accordingly, the reflection of light incident on the rear surface of the display substrate 111 is suppressed by the light reflection prevention pattern 111 a. Accordingly, most of light transferred from the second display module 20 or light reflected by the display material 113 or a front surface of the rear substrate 112 passes through the display substrate 111 as it is without being reflected, such that the quantity of light output to the front of the first display module 10 increases. Thus, visibility of the display apparatus 8 increases by the light reflection prevention pattern 111 a provided at the rear surface of the display substrate 111.

The front light unit 120 includes a light guide plate 121 formed in the shape of a quadrilateral flat plate and disposed in front of the display panel 110, and a light source 122 disposed at one side of the light guide plate 121 to generate light and supply the light to the light guide plate 121.

The light guide plate 121 plays a role of enabling light incident at the front side of the first display module 10 through the front surface thereof to be transmitted through the light guide plate 121 as it is in order to be transferred to the display panel 110 and a role of guiding light supplied from the light source 122 to the display panel 110.

A light reflection prevention layer 123 to decrease reflection of light incident on the front surface of the light guide plate 121 to the front of the first display module 10 is provided at the front surface of the light guide plate 121. Accordingly, the light incident on the front surface of the light guide plate 121 from the front of the light guide plate 121 may be more efficiently incident into the light guide plate 121 by the light reflection prevention layer 123. Also, although not illustrated in the drawings, a reflective pattern to reflect light supplied from the light source 122 to the display panel 110 may be formed at the front surface of the light guide plate 121 such that the light incident into the light guide plate 121 may be supplied to the display panel 110.

In this embodiment, the display substrate 111 on which a nanopattern is formed, the clear electrode 111 b disposed at the rear surface of the display substrate 111, and the light guide plate 121 provided in front of the display substrate 111 are integrally formed by etching. Accordingly, the thickness of the first display module 10 may be considerably reduced by this.

The light source 122 includes a substrate 122a and a plurality of light-emitting diodes 122b disposed at the substrate 122a to generate light. In this embodiment, the substrate 122a is disposed parallel to the light guide plate 121, and the light-emitting diodes 122b are installed at a rear surface of the substrate 122a while one surface at which light is generated is disposed to face a side end of the light guide plate 121. Accordingly, the light generated from the light-emitting diodes 122b is incident into the light guide plate 121 through the side end of the light guide plate 121.

Although the light reflection prevention layer 123 is formed by forming an additional film at the front surface of the light guide plate 121 by coating, and the like, in this embodiment, embodiments are not limited thereto. A pattern similar to the light reflection prevention pattern 111 a formed at the rear surface of the display substrate 111 may be formed at the front surface of the light guide plate 121 to suppress reflection of light.

Although the display apparatus includes the second display module 20 in this embodiment to have superior visibility even in an environment with a small amount of light, embodiments are not limited thereto. The display apparatus may include only the first display module 10 without the second display module 20.

Although the plurality of light-emitting diodes 122b are disposed to face the side end of the light guide plate 121 in this embodiment to directly supply light to the light guide plate 121, embodiments are not limited thereto. As illustrated in FIGS. 3 to 5, a bar-shaped light guide member may be disposed at the side end of the light guide plate 121 to transfer light generated in the light-emitting diodes 122b to the light guide plate 121 through the light guide member.

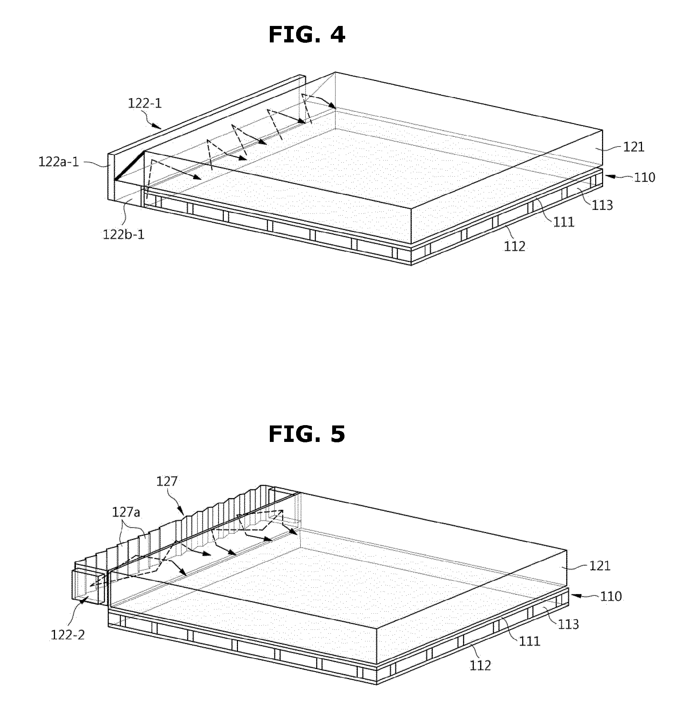

In FIGS. 3 and 4, the front light unit 120 applied to a display apparatus according to a second embodiment of the present disclosure is illustrated.

As illustrated, the light guide plate 121 is disposed in front of the display panel 110, and a light guide member 125 having a right-angled triangular cross-section is disposed at one end of the light guide plate 121.

A substrate 122a-1 of the light source 122 is disposed to be spaced apart and parallel to a side surface of the light guide plate 121, a light-emitting diode 122b-1 is disposed behind the light guide member 125 to supply light toward a rear surface of the light guide member 125. A reflective layer 126 to reflect light is formed at a surface of the light guide member 125 forming a hypotenuse.

Accordingly, the light generated by the light-emitting diode 122b-1 is incident through the rear surface of the light guide member 125, and then reflected by the reflective layer 126 to be incident into the light guide plate 121 through one end surface of the light guide plate 121.

In FIG. 5, the display panel 110 and the front light unit 120 applied to a display apparatus according to a third embodiment of the present disclosure are illustrated.

As illustrated, the light guide plate 121 is disposed in front of the display panel 110, and a light guide member 127 having a roughly quadrilateral cross-section is disposed at one end side of the light guide plate 121.

Two light sources 122-2 are respectively installed at both ends of the light guide member 127 to face each other, and a reflective pattern 127a to reflect light incident into the light guide member 127 toward one end of the light guide plate 121 is formed at the light guide member 127. The reflective pattern 127a is formed by grooves having roughly triangular cross-sections.

Accordingly, the light generated in the light sources 122-2 is incident into the light guide member 127 through one end of the light guide member 127 to move along the light guide member 127, and then reflected toward the side end of the light guide plate 121 by the reflective pattern 127a to be incident into the light guide plate 121 through one end of the light guide plate 121.

Although the two light sources 122-2 are respectively installed at both ends of the light guide member 127 to face each other, embodiments are not limited thereto. One light source may be installed at only one of the both ends of the light guide member.

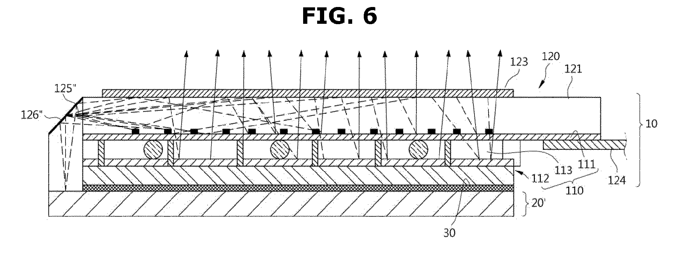

In addition, as a fourth embodiment of the present disclosure illustrated in FIG. 6, a second display module 20' may employ a spontaneous light-emitting display panel such as an organic light-emitting diode panel to limitedly generate light at a partial region of the spontaneous light-emitting display panel forming the second display module 20', and the light may be supplied to the first display module 10 through a light guide member 125' at which a reflective layer 126' is provided. In this case, a light source to supply light to the first display module 10 may be deleted.

As described above, a display apparatus according to an embodiment of the present disclosure includes a light reflection prevention pattern formed at a rear surface of a display substrate, such that the quantity of light passing through the display substrate and transferred to the front increases by the light reflection prevention pattern, thereby improving visibility of the display apparatus.

In addition, the display substrate on which a nanopattern is formed, a clear electrode, and a light guide plate are integrally formed by etching, thereby considerably reducing the thickness of a first display module.

The present disclosure is not limited to the above-described embodiments, and it should be apparent to those of ordinary skill in the art that the present disclosure may be modified and changed in various ways without departing from the spirit of the present disclosure. Accordingly, modified or changed embodiments should be deemed as belonging to the claims of the present disclosure.

## Claims

1. A display apparatus comprising a display panel, wherein:
the display panel comprises a display substrate and a rear substrate spaced apart in front and rear directions and a display material filled between the display substrate and the rear substrate; and
a light reflection prevention pattern to suppress a reflection of light incident from a rear side is formed at a rear surface of the display substrate.

2. The display apparatus according to claim 1, wherein the light reflection prevention pattern is formed by grooves having a depth and width of nanoscales.

3. The display apparatus according to claim 1, further comprising a front light unit disposed in front of the display panel to supply light to the display panel.

4. The display apparatus according to claim 3, wherein the front light unit comprises a light guide plate disposed in front of the display panel and a light source to generate light.

5. The display apparatus according to claim 4, wherein the light source comprises a substrate and a plurality of light-emitting diodes disposed on the substrate.

6. The display apparatus according to claim 5, wherein:
the substrate is disposed parallel to one end of the light guide plate; and
the plurality of light-emitting diodes are disposed on one surface of the substrate facing the one end of the light guide plate.

7. The display apparatus according to claim 6, further comprising a light guide member formed in a bar shape and disposed to face a side end of the light guide plate.

8. The display apparatus according to claim 7, wherein:
the light guide member is formed to have a right-angled triangular cross-section; and
a reflective layer to reflect light is formed at a surface of the light guide member forming a hypotenuse.

9. The display apparatus according to claim 8, wherein:
the plurality of light-emitting diodes are disposed to face an end of the light guide member; and
the light guide member comprises a reflective pattern to reflect light toward a side end of the light guide plate.

10. The display apparatus according to claim 4, wherein the front light unit comprises a light reflection prevention layer provided at a front surface of the light guide plate to suppress the reflection of light incident.

11. The display apparatus according to claim 4, wherein the front light unit comprises a light reflection prevention pattern provided at the front surface of the light guide plate to suppress the reflection of light.
